# EUROPÄISCHE PATENTSCHRIFT

(11) **EP 4 259 555 B1**
(45) Veröffentlichungstag und Bekanntmachung des Hinweises auf die Patenterteilung: **13.05.2026**
(21) Anmeldenummer: 21839009.4
(22) Anmeldetag: 08.12.2021
(51) Int. Cl.: B65G 17/34

(54) **AUSSCHLEUSVORRICHTUNG**
DISCHARGE DEVICE
DISPOSITIF D'ÉJECTION

(30) Priorität: 10.12.2020 DE 102020132966; 27.04.2021 DE 102021110697
(43) Veröffentlichungstag der Anmeldung: 18.10.2023
(60) Teilanmeldung: 26155379.6
(73) Patentinhaber: Interroll Holding AG, 6592 Sant'Antonino (CH)
(72) Erfinder: DUDEK, Siegmund, 41836 Hückelhoven (DE); HAGMAIER, Christian, 41836 Hückelhoven (DE)
(74) Vertreter: Kohlhof, Stephan
(86) Internationale Anmeldenummer: PCT/EP2021/084717
(87) Internationale Veröffentlichungsnummer: WO 2022/122792

(56) Entgegenhaltungen:
- EP-A1- 1 153 860
- JP-U- S6 393 326
- US-A- 3 231 068
- US-A1- 2014 014 468
- US-A1- 2015 360 869

## Beschreibung

Die Erfindung betrifft eine Ausschleusvorrichtung.

Die WO 2020/025329 A1 offenbart einen Quergurtsorter in der Konfiguration als Horizontalsorter. Der Quergurtsorter umfasst eine Vielzahl an Förderwagen, die in einer Fahrtrichtung hintereinander angeordnet sind. Jeder Förderwagen umfasst einen Quergurt, auf dem ein Fördergut aufgebracht werden kann. Der Quergurt ist bewegbar in einer Querrichtung, die quer zur Fahrtrichtung ausgerichtet ist. Zum Aussortieren des Förderguts wird der Quergurt gezielt angetrieben, wodurch das Fördergut in Förderrichtung betrachtet seitlich beschleunigt wird und vom Förderwagen hinunterbefördert wird (Ausschleusen). Ein solcher Quergurtsorter zeichnet sich durch die Fähigkeit aus, selbst bei hohen Fördergeschwindigkeiten das Fördergut präzise auszuschleusen. Solche Quergurtsorter sind große Installationen, die einen Flächenbedarf von über 100 Quadratmetern erfordern.

Zum Einbringen des Förderguts auf den Quergurtsorter (Einschleusen) wird zumeist ein seitlicher Einschleuser (sogenannte Infeeds) verwendet, welcher das Fördergut relativ zur Förderrichtung der Quergurtsorters in einem spitzen Winkel an den Quergurtsorter heranführt. Alternativ können sogenannte Toploader verwendet werden, die das Fördergut von oben auf den Förderwagen abwerfen.

Die DE 20 2012 04 830 U1 offenbart einen Quergurtsorter in der Konfiguration als Vertikalsorter. Die Rückführung der Förderwagen erfolgt dabei in einer Ebene vertikal unterhalb einer Förderebene für die Fördergüter. Sämtliche Fördergüter, die auf den Vertikalsorter aufgebracht werden, müssen vor dem hinteren Ende seitlich ausgeschleust werden oder werden am Ende in einer Auffangstation aufgefangen. Aufgrund der vertikalen Umlenkung ist es - anders als bei einem Horizontalsorter - nicht möglich, das Fördergut in einem Kreislauf wieder an einen Ausgangspunkt zurückzuführen. Die Förderwagen eines Vertikalsorters sind ähnlich groß wie beim Horizontalsorter und erfordern große Umlenkradien.

Die Förderwagen der Quergurtsorter sind derart dimensioniert, dass diese ein Fördergut vollständig aufnehmen können. Eine typische Länge in Förderrichtung beträgt daher etwa zwischen 50 und 100 cm. Aufgrund der Förderwagengröße und dem damit einhergehenden Umlenkradius der Förderwagen verlangt die Installation eines Quergurtsorters einen großen Platzbedarf. Zudem ist der Zugang zum Quergurtsorter weiträumig durch Zäune abzusichern, um die Gefahr von Verletzungen am bewegten Förderwagen zu vermeiden.

Zum Ausschleusen eines Fördergutes im Verlauf einer modularen Bandförderstrecke oder einer Rollenförderstrecke ist es nicht erforderlich, einen hochpreisigen Quergurtsorter bereitzustellen. Hierzu bieten sich die unter der Bezeichnung "Interroll High Performance Divert 8711" und "Interroll Transfer RM 8731" am Markt verfügbaren Lösungen an, um im Anschluss an eine Band- oder Rollenförderstrecke oder auch zwischen mehreren solcher Förderstrecken eine oder mehrere Ausschleusstationen zu realisieren.

Beim "Interroll Transfer RM 8731" wird das Fördergut während des Ausschleusens in Förderrichtung vollständig abgebremst, um anschließend in einer Ausschleusrichtung quer zur Förderrichtung beschleunigt zu werden.

Sowohl der "Interroll Transfer RM 8731" als auch der "Interroll High Performance Divert 8711" können nur mit einer Fördergeschwindigkeit betrieben werden, die deutlich unter der Fördergeschwindigkeit des Quergurtsorters liegt.

Die vorgenannten Lösungen können in einer Rollenförderstrecke oder einer Bandförderstrecke modular eingesetzt werden. Der Vorteil von solchen Ausschleuseinheiten im Gegensatz zum Quergurtsorter ist insbesondere, dass das Einbringen des Förderguts auf die Ausschleuseinheit in der Förderebene erfolgen kann. Auch kann der kompakten Ausschleuseinheit in Förderrichtung nachgelagert unmittelbar eine weitere Rollenförderstrecke oder Bandförderstrecke angeordnet sein, durch welche ein nicht ausgeschleustes Fördergut einfach zur nächsten Station weitertransportiert werden kann.

Die US 2015/360869 A1 wird von der Erteilungsbehörde als nächstliegender Stand der Technik angesehen. Diese beschreibt ein Fördersortiersystem, umfassend einen Rahmen und zwei oder mehr Wagen, die entlang des Rahmens in einer Bewegungsrichtung fahren. Jeder Wagen umfasst ein Band, das in einer Richtung quer zur Bewegungsrichtung der Wagen ausgerichtet ist, sowie einen Elektromotor, der zum Antreiben des Bandes konfiguriert ist. Das Band eine Breite von höchstens 8 Zoll auf.

Die EP 1 153 860 A1 beschreibt eine Fördervorrichtung, die einen Hauptförderabschnitt umfasst, der durch Verbinden einer Vielzahl von Förderuntereinheiten gebildet wird, und eine Antriebsvorrichtung zum Antreiben des Hauptförderabschnitts. Jede der Förder- oder Untereinheiten weist einen sekundären Förderabschnitt, eine Antriebsvorrichtung für den sekundären Förderabschnitt zum Vorwärts- und Rückwärtsantreiben des sekundären Förderabschnitts und eine Vorrichtung zum Kommunizieren mit einer Steuerbefehlsvorrichtung auf, Eine Förderrichtung jedes der sekundären Förderabschnitte ist orthogonal zu einer Förderrichtung des Hauptförderabschnitts. Es ist Aufgabe der vorliegenden Erfindung, eine verbesserte Ausschleusvorrichtung bereitzustellen, die insbesondere flexibel mit anderen Förderstrecken einsetzbar ist. Die Ausschleusvorrichtung soll insbesondere eine mit den Quergurtsortern vergleichbare Leistungsfähigkeit aufweisen, aber deutlich geringeren Bauraum und Installationsaufwand erfordern damit auch deutlich günstiger sein.

Die der Erfindung zugrundeliegende Aufgabe wird gelöst durch eine Ausschleusvorrichtung nach Anspruch 1, eine Förderanlage nach Anspruch 5 sowie eine Verwendung nach Anspruch 7. Vorteilhafte Weiterbildungen der Erfindung sind in den abhängigen Ansprüchen angegeben.

Die Transportgurte sind vorgesehen, um eine Auflagefläche für das Fördergut in Förderrichtung bereitzustellen. Die Transportgurte sind zudem eingerichtet, zugleich das Fördergut seitlich auszuschleusen. Zudem kann das Fördergut mit einem hohen Reibwert auf dem Fördergurt aufliegen. Insgesamt ergibt sich folglich dadurch eine sehr hohe Zuverlässigkeit der seitlichen Ausschleusung auch bei hohen Fördergeschwindigkeiten.

In einer Ausgestaltung beträgt die Fördergeschwindigkeit in Förderrichtung zumindest 1,5 m/s, vorzugsweise zumindest 2,0 m/s, weiter vorzugsweise 2,5 m/s.

Als Gurtschlitten wird dabei die übergeordnete Anordnung bezeichnet, die den Transportgurt umfasst. Neben dem Transportgurt kann der Gurtschlitten auch Gurtrollen, ein Gurtschlittengestell sowie Führungsrollen zur Führung des Gurtschlittens entlang der Führung umfassen. Die Führung ist an einem, insbesondere stationären, Gestell befestigt.

Die Ausschleusvorrichtung lässt sich im Gegensatz zu den Quergurtsortern, insbesondere modular, zwischen einer vorgelagerten Förderstrecke und einer nachgelagerten Förderstrecke anordnen, bei denen das Fördergut jeweils in der Förderebene angeliefert wird und - sofern nicht in der Ausschleusvorrichtung ausgeschleust - wieder in der Förderebene an die nachgelagerte Förderstrecke übergeben wird.

Der Gurtschlitten selbst und/oder der Transportgurt weist eine vergleichsweise geringe Baulänge in Förderrichtung auf. Dies verschafft die Möglichkeit, einen sehr geringen vertikalen Umlenkradius zu realisieren. Dieser geringe Umlenkradius wiederum begünstigt die Übernahme und Übergabe von der vorgelagerten bzw. an die nachgelagerte Förderstrecke in Förderrichtung und in der Förderebene. Dies wiederum ist eine mögliche Voraussetzung zur modularen Einbindung der Ausschleusvorrichtung in kostengünstige Band- und/oder Rollenförderstrecken.

Bei einer Bandförderstrecke ist ein Förderband vorgesehen, welches insbesondere auf einem stationären Gestell befestigt ist. Das Förderband ist um zumindest zwei Umlenkrollen gelegt und kann umlaufend bewegt werden. Auf der Oberseite des Förderbands kann ein Fördergut in einer Förderrichtung bewegt werden.

Bei einer Rollenförderstrecke sind eine Vielzahl von Förderrollen vorgesehen. Die Förderrollen sind insbesondere auf einem stationären Gestell befestigt. Die Förderrollen sind zumindest teilweise durch einen Motor angetrieben, wobei dabei eine oder mehrere der Förderrollen als Motorrolle ausgebildet sein können. Die Förderrollen definieren mit deren Oberseite eine Förderebene, auf der das Fördergut zur Anlage kommt und gefördert wird. Das Fördergut liegt während des Fördervorgangs immer zumindest auf zwei Rollen gleichzeitig auf.

In einer Ausgestaltung beträgt die Länge der Ausschleusvorrichtung max. 10 m, insbesondere max. 7 m.

Der Transportgurt kann insbesondere ein Poly-V-Riemen oder ein Zahnriemen sein. Bevorzugt liegt ein Obertrum des Transportgurts gleitend auf einem flächigen Untergrund am Gurtschlitten auf. Auf die Verwendung von Stützrollen kann daher verzichtet werden. Zu berücksichtigen ist dabei, dass meistens keine Relativbewegung zwischen dem Gurtschlitten und dem Transportgurt vorliegt, sondern nur dann, wenn ein Fördergut tatsächlich ausgeschleust werden soll. Die dabei auftretende Reibung zwischen dem Transportgut und dem Gurtschlitten ist dabei hinnehmbar.

Der Begriff Förderebene ist hierbei breit zu verstehen und verlangt nicht zwangsläufig eine mathematisch exakte ebene Fläche. Vielmehr ist der Begriff Förderebene in Abgrenzung zu fallenden Übergängen zu betrachten wie dies in extremer Form bei dem vorgestellten Toploader auftritt. Insofern kann die Förderebene durchaus geringfügige Höhendifferenzen aufweisen, insbesondere im Bereich bis max. 7 cm, insbesondere max. 4 cm.

Die Förderrichtung und/oder die Förderebene kann am Übergabepunkt bzw. Übernahmepunkt jeweils infinitesimal klein sein, insbesondere wenn die erste Förderstrecke oder die zweite Förderstrecke kurvig aufgebaut ist. Allerdings weist die Förderrichtung am Übergabepunkt bzw. Übernahmepunkt insbesondere einen stetigen Verlauf auf.

In einer Ausgestaltung ist die Ausschleusvorrichtung für eine Verwendung eingerichtet, bei der die kleinste Seitenlänge (Breite) des Förderguts max. 120 mm beträgt, insbesondere max. 100 mm vorzugweise max. 90 mm beträgt. Selbstverständlich kann die Ausschleusvorrichtung auch größere Fördergüter fördern. Insbesondere ist die Ausschleusvorrichtung dafür eingerichtet, ein Fördergut zu fördern, das eine kleinste Seitenlänge von 120 mm aufweist.

Jedes geeignete Fördergut ist derart bemessen, dass es gleichzeitig auf zumindest zwei benachbarten Transportgurten zur Anlage kommt.

Als relevante Seitenlängen werden dabei diejenigen äußeren Begrenzungen des Förderguts verstanden, die in der Draufsicht erkennbar sind, wenn das Fördergut mit der größten Seitenfläche, also insbesondere flach, auf der Förderebene aufliegt. Die Höhe (auch häufig als Dicke bezeichnet) eines Transportkuverts ist diesbezüglich somit nicht als Seitenlänge anzusehen.

Der Transportgurt ist insbesondere formschlüssig antriebsverbunden mit einem Antriebsrad. Insbesondere ist der Transportgurt ein Zahnriemen mit Erhebungen auf einer Unterseite, die zum Eingriff mit einem Zahnrad als Antriebsrad dienen.

Die Erfindung wird anhand der Figuren nachfolgend näher erläutert; hierin zeigt:
- Figur 1: einen Ausschnitt eines herkömmlichen Quergurtsorters in der Konfiguration eines Horizontalsorters in Draufsicht;
- Figur 2: einen herkömmlichen Quergurtsorter in der Konfiguration eines Vertikalsorters in Seitenansicht;
- Figur 3: eine Draufsicht auf eine erfindungsgemäße Förderanlage;
- Figur 4: schematisch ein Geschwindigkeitsprofil eines Förderguts beim Ausschleusen in der Förderanlage nach Figur 3;
- Figur 5: eine Ausgestaltung der Ausschleusvorrichtung aus der Förderanlage nach Figur 3 in perspektivischer Darstellung;
- Figur 6: einen schematischen Querschnitt durch die Ausschleusvorrichtung entlang der Schnittlinie X-X in Figur 3;
- Figur 7: eine Vergrößerung des Ausschnitts Y aus Figur 5;
- Figur 8: einen Schnitt entlang der Schnittebene Z aus Figur 7;
- Figur 9: einen perspektivische Schnittdarstellung entlang der geknickten Schnittebene XY aus Figur 7;
- Figur 10: den Transportgurt und einen Gurtantrieb zum Antreiben des Transportgurts,
a) in Frontalansicht,
b) teilweise das Untertrum in Draufsicht;
- Figur 11: ein für die bestimmungsgemäße Verwendung geeignetes Fördergut in Form eines Transportkuverts;
- Figur 12: schematisch eine Ausgestaltung des Schlittens in Frontansicht
a) im normal belasteten Zustand,
b) im überlasteten Zustand;
- Figur 13: schematisch eine Ausgestaltung des Schlittens in Frontansicht
a) im normal belasteten Zustand,
b) im überlasteten Zustand;
- Figur 14: ausschnittsweise einen Querschnitt durch eine weitere Ausgestaltung der Schlitten in der Ausschleusvorrichtung nach Figur 5;
- Figur 15: einen weiteren Querschnitt durch die Schlitten nach Figur 14 in kleinerem Maßstab;
- Figur 16: einen Querschnitt durch den Transportgurt 24;
- Figur 17: a) einen Ausschnitt einer Ausgestaltung eines Gurtschlittens der vorgenannten Art;
b) einen schematischen Querschnitt durch den Gurtschlitten nach Figur 16a.

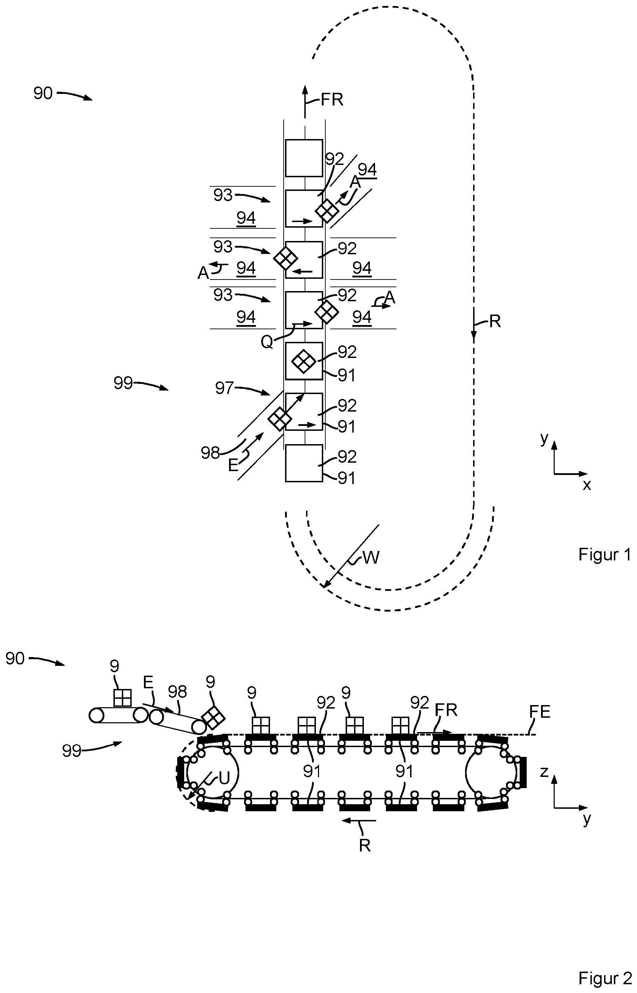

Die Figuren 1 und 2 zeigen Ausgestaltungen von nicht beanspruchten Quergurtsortern 90. Diese umfassen eine Vielzahl an Förderwagen 91, die in einer Förderrichtung FR verfahrbar sind und entlang der Förderrichtung hintereinander angeordnet sind. Oben auf jedem der Förderwagen 91 ist ein Quergurt 92 angeordnet. Eine Oberseite des Quergurts 92 bildet dabei eine Auflagefläche für ein Fördergut 9 aus und definiert zugleich eine Förderebene FE. In der bestimmungsgemäßen Verwendung kommt dabei ein kleinstmögliches Fördergut auf maximal einem Förderwagen 91 und einem Quergurt 92 zu liegen. Ein übergroßes Fördergut kann auch auf zwei oder mehr Förderwagen 91 und Quergurten 92 gleichzeitig zu liegen kommen. Jeder Förderwagen weist eine Länge in Förderrichtung von zumindest 50 cm auf.

Es sind eine Vielzahl von Ausschleusstationen 93 vorgesehen, an denen das Fördergut 9 selektiv vom Förderwagen 91 entfernt und in einen seitlich vom Förderwagen 91 vorgesehenen Ausschleusbereich 94 befördert werden kann. Dazu wird der Quergurt 92 auf dem Förderwagen 91 in Bewegung versetzt, wodurch das Fördergut quer zur Förderrichtung FR beschleunigt und schließlich bewegt wird.

Ein Einschleusbereich 99 ist vorgesehen, um das Fördergut 9 auf einen der Förderwagen 91 aufzulegen. Das Fördergut 9 wird initial auf einer Einschleusförderstrecke 98 bereitgestellt, auf welcher das Fördergut 9 entlang einer Einschleusrichtung E auf den Förderwagen 91 zubewegt wird.

In der Ausgestaltung nach Figur 1 ist die Einschleusrichtung E in Draufsicht betrachtet in einem spitzen Winkel etwa zwischen 30° und 60° zur Förderrichtung FR angeordnet, wobei die Einschleusrichtung E in der Förderebene FE liegen kann. Die beiden Richtungen E, FR treffen sich an einer Verbindungsstelle 97 (auch als "Merge" bezeichnet). An der Verbindungsstelle 97 wird das Fördergut von der Einschleusförderstrecke 98 auf den Förderwagen 91 übergeben. Zur Aufnahme des Förderguts am Förderwagen kann der Quergurt in einer quer zur Förderrichtung ausgerichteten Querrichtung Q (nach rechts oder links) bewegt werden.

In der Ausgestaltung nach Figur 2 kann die Einschleusrichtung E in Draufsicht betrachtet zwar exakt zur Förderrichtung FR ausgerichtet sein. Allerdings ist es dann erforderlich, die Einschleusförderstrecke 98 oberhalb des Förderwagens 91 anzuordnen. Das Fördergut wird dann aus einer Ebene oberhalb der Förderebene FE auf den Förderwagen 91 abgeworfen. Ein solcher Einschleusbereich wird auch als "Toploader" bezeichnet und ist in der Figur 2 gezeigt.

Die herkömmlichen Quergurtsorter sind weder in der Konfiguration als Horizontalsorter noch in der Konfiguration als Vertikalsorter in der Lage, ein Fördergut von einer solchen Förderstrecke 98 zu übernehmen, welche das Fördergut sowohl in Förderrichtung FR als auch in der Förderebene FE des Quergurtsorters am Übernahmebereich heranführt. Auch ist keine Übergabe des Förderguts von dem Quergurtsorter an eine nachgelagerte Förderstrecke möglich, bei der das Fördergut sowohl in Förderrichtung FR als auch in der Förderebene FE des Quergurtsorters am Übergabebereich übernommen wird.

Die in einem Kreislauf sich bewegenden großen Förderwagen der Quergurtsorter erfordern stets einen großen Bauraum, um insbesondere den Förderwagen umzulenken und auf einem Rückpfad R wieder zum Einschleusbereich 99 zurückzuführen. Beim einem Vertikalsorter (Figur 2) beträgt ein Umlenkradius U an der Oberfläche des Quergurts etwa 1 m. Aufgrund der daraus resultierenden großen Spaltlänge kann ein Rollenförderer oder ein Bandförderer nicht unmittelbar in Förderrichtung FR vorgelagert oder nachgelagert angeschlossen werden. Bei einem Horizontalsorter (Figur 1) ist ein Wendekreisradius W größer als 1,5 m.

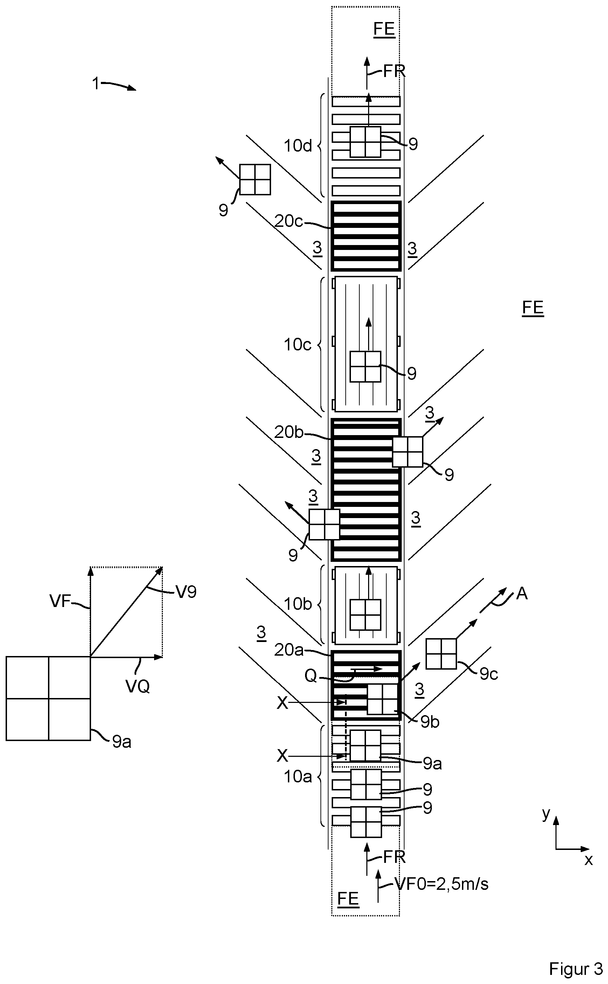

Figur 3 zeigt eine erfindungsgemäße Förderanlage 1 mit Sortierfunktion. Es sind in einer Förderrichtung FR hintereinander mehrere Einrichtungen 10, 20 zur Förderung von Fördergütern 9 angeordnet. Die Fördergüter 9 werden zunächst über eine Förderstrecke 10a herangeführt. Anschließend werden diese an eine erste Ausschleusvorrichtung 20a übergeben. Es folgen weitere Förderstrecken 10b, 10c, 10d und weitere Ausschleusvorrichtungen 20b, 20c, wobei die Ausschleusvorrichtungen 20 zwischen zwei Förderstrecken 10 angeordnet sind. Die Förderstrecken können hierbei beliebig als Rollenförderstrecken 10a, 10d oder als Bandförderstrecken 10b, 10c ausgebildet sein.

Die Ausschleusvorrichtung 20 kann selektiv ausgewählte Fördergüter 9 aus der Förderrichtung FR ablenken und in einen seitlich zur Förderrichtung FR angeordneten Ausschleusbereich 3 befördern, welcher in Förderrichtung FR seitlich versetzt zur Ausschleusvorrichtung 20 ist. Dazu wird das Fördergut 9 zumindest kurzfristig in Querrichtung Q beschleunigt.

Bei der Förderstrecke 10 kann es sich um einen Rollenförderer oder einen Bandförderer handeln, der eingerichtet ist, das Fördergut 9 entlang der vordefinierten Förderrichtung FR zu fördern. Die Förderrichtung FR kann, z.B. bei einer Gurtkurve oder einer Rollenkurve, auch einen gekrümmten Verlauf aufweisen. Bedeutsam ist hierbei, dass die Förderanlage 1 von der ersten Förderstrecke 10a bis zur vierten Förderstrecke 10d über die Ausschleusvorrichtungen 20 eine durchgängige Förderebene FE ausbildet.

Die Ausschleusvorrichtung 20 könnte dem Grunde nach in einer herkömmlichen Förderanlage durch den eingangs beschriebenen "Interroll High Performance Divert 8711" oder "Interroll Transfer RM 8731" realisiert sein. In Rahmen der vorliegenden Erfindung ist die Ausschleusvorrichtung 20 ausgebildet wie weiter unten beschrieben.

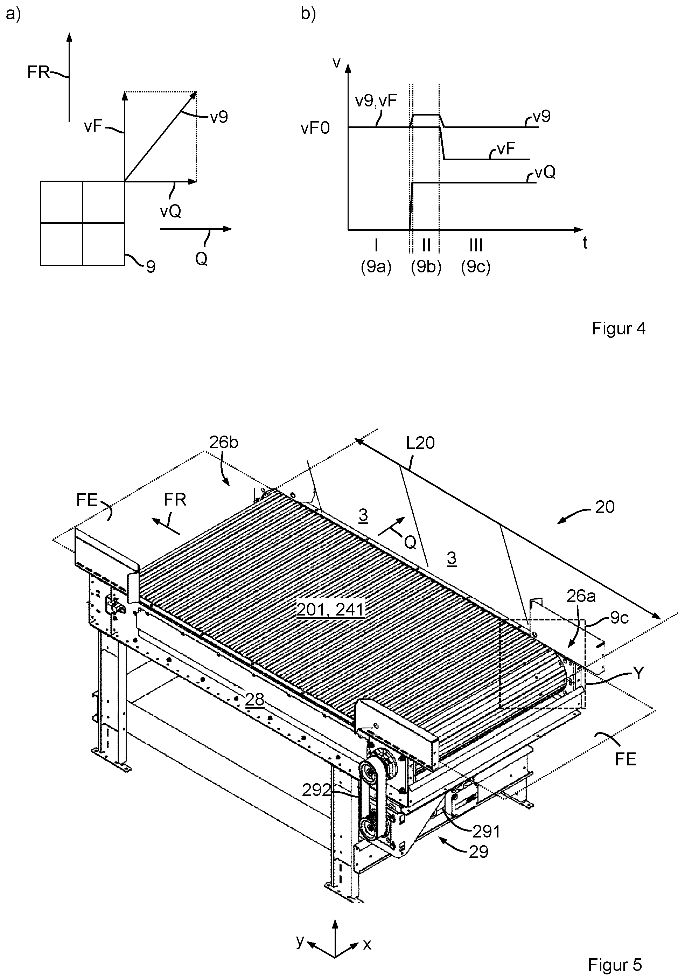

Die Figuren 5 bis 10 zeigen Details einer erfindungsgemäßen Ausschleusvorrichtung 20 und werden nachfolgend gemeinsam beschrieben.

Die Ausschleusvorrichtung 20 umfasst ein Gestell 28 mit beispielsweise vier Füßen (Figur 5). Die Ausschleusvorrichtung 20 bildet eine Förderfläche 201 aus, auf welcher Fördergut 9 in Förderrichtung FR befördert werden kann. Die Förderfläche 201 definiert die Förderebene FE.

Die Ausschleusvorrichtung 20 umfasst eine Führung 23, entlang derer eine Vielzahl an Gurtschlitten 21 angeordnet sind. Die Gurtschlitten 21 sind derart beweglich an der Führung 23 angeordnet, dass die Gurtschlitten 21 in einem Kreislauf bewegt werden. An der ersten Seite, hier der Oberseite, bewegen sich die Gurtschlitten in Förderrichtung FR. An einem Übernahmeort 26a wird das Fördergut 9 von der vorgelagerten Förderstrecke 10a übernommen und auf einer Oberseite des Gurtschlittens 21 angeordnet. An einem Übergabebereich 26b wird das Fördergut 9 an eine nachgelagerte Förderstrecke 10c übergeben und auf einer Oberseite des Gurtschlittens 21 angeordnet, sofern dieses nicht zuvor seitlich ausgeschleust wurde.

Jeder Gurtschlitten 21 trägt einen Transportgurt 24, dessen Längserstreckung in Querrichtung Q (siehe Figur 3) ausgerichtet ist. Der Transportgurt 24 steht oben über den Gurtschlitten 21 hervor und stellt somit eine Auflagefläche 241 dar, die die Förderebene FE definiert und auf der das aufliegende Fördergut 9 zur Anlage kommt. Da sich der gesamte Gurtschlitten 21 mitsamt dem Fördergut 9 mit der Grundgeschwindigkeit v0 bewegt, kommt es am Transportgurt 24 zu keiner wesentlichen trägheitsbedingten Kraftübertragung zwischen dem Transportgurt 24 und dem Fördergut 9.

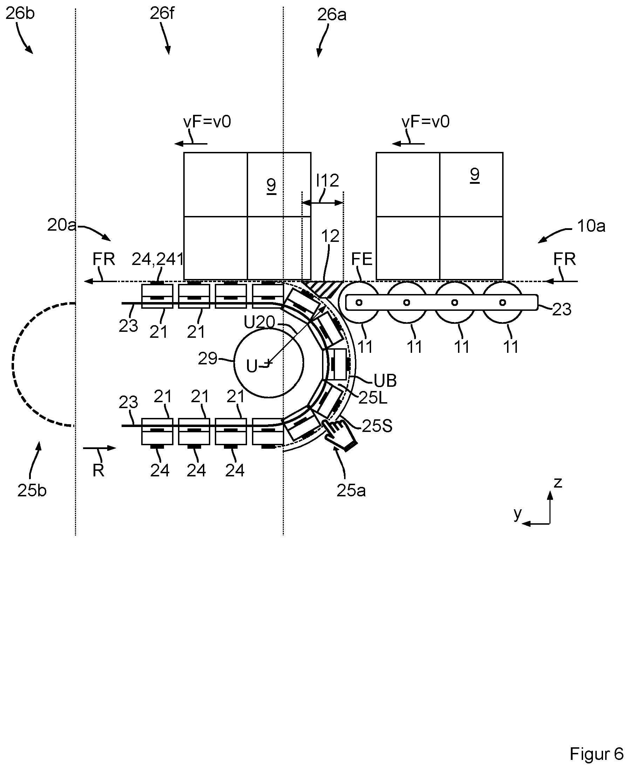

Der Gurtschlitten wird durch einen Antrieb 29 in Förderrichtung angetrieben. Der Antrieb kann einen Motor 291 sowie ein dazu separates Getriebe 292 umfassen (Figur 5). Alternativ kann der Antrieb als Trommelmotor 29 ausgebildet sein (Figur 6).

Das Fördergut 9 wird folglich mit dem Gurtschlitten 21 in Förderrichtung FR befördert (Figur 6). Während der Beförderung können selektiv einzelne Fördergüter 9 seitlich ausgeschleust werden. Nicht ausgeschleuste Fördergüter 9 gelangen zu dem Übergabebereich 26b, an den sich die nachgelagerte Förderstrecke 10b anschließt. Die nicht ausgeschleusten Fördergüter 9 werden hier an die nachgelagerte Förderstrecke 20b übergeben. An einem hinteren Umlenkbereich 25b werden die Gurtschlitten, hier nach unten, umgelenkt, und gelangen so in der Folge entlang eines Rückpfades R zu einem vorderen Umlenkbereich 25a. An dem vorderen Umlenkbereich 25a werden die Gurtschlitten 21 nach oben umgelenkt und gelangen so an den Übernahmebereich 26a zurück, an dem erneut ein Fördergut 9 aufgenommen werden kann.

Der Bereich nach dem Übernahmebereich 26a und vor dem Übergabebereich 26b wird als Förderbereich 26f bezeichnet. Hier ist das Fördergut 9 in Anlage mit dem Gurtschlitten 21. Das Fördergut 9, das mit der Förderanlage bestimmungsgemäß verwendet wird, ist zumindest derart groß dimensioniert, dass es, sofern es vollständig im Förderbereich 26f angeordnet ist, auf zumindest zwei Gurtschlitten 21 aufliegt, insbesondere auf dem Transportgurt zweier benachbarter Gurtschlitten zur Anlage kommt . Ein kleineres Fördergut kann nicht zuverlässig gefördert werden, da es in die Zwischenräume zwischen zwei benachbarten Transportgurten 24 gelangen kann; eine zuverlässige Ausschleusung wäre in diesem Fall nicht gewährleistet.

Die Besonderheit liegt darin, dass am Übernahmeort 26a das Fördergut 9 von der vorgelagerten Förderstrecke 10a stetig in der Förderrichtung FR übernommen wird. Das bedeutet insbesondere, dass sowohl in der Ausschleusvorrichtung 20a sowie in der vorgelagerten Förderstrecke 10a das Fördergut sowohl in Draufsicht als auch in Seitenansicht in derselben Förderrichtung FR geführt wird und sowohl auf der vorgelagerten Förderstrecke als auch anschließend in der Ausschleusvorrichtung 20 einer gemeinsamen Förderebene FE gefördert wird. Eine solche Übernahme bzw. Übergabe ist mit herkömmlichen Quergurtsortern nicht möglich.

Im Umlenkbereich 25 wird der Gurtschlitten 21 jeweils nach unten verlagert. Während der Umlenkung im Umlenkbereich fährt die Auflagefläche 241 entlang einer nach unten gebogenen Umlaufbahn UB (Figur 6). Die Umlaufbahn weist zumindest abschnittsweise einen Umlenkradius U20 um eine Umlenkachse U von beispielsweise 110 mm auf. Der geringe Umlenkradius ermöglich die stetige Übernahme / Übergabe des Förderguts in Förderrichtung FR und Förderebene FE.

In dem Bereich radial innen zwischen den Gurtschlitten kann als Antriebseinheit ein Trommelmotor 29 vorgesehen sein (alternativ zur Darstellung nach Figur 5). Der Trommelmotor kann als integrale Einheit umfassend einen Elektromotor und ein Getriebe ausgebildet sein.

Ein Spalt in der Förderebene FE zwischen der ersten Förderstrecke 10a und der Ausschleusvorrichtung 20 kann durch eine passive Spaltbrücke 12 bedeckt werden (Figur 6). Die passive Spaltbrücke 12 stellt dabei eine Auflagefläche bereit, ohne dass hier Förderrollen oder andere Förderelemente vorhanden sind. Die maximale Länge I12 in Förderrichtung FR der Spaltbrücke 12 ist dabei abhängig von der minimalen Größe des Förderguts 9. Es muss stets sichergestellt sein, dass das Fördergut auf zumindest einem bewegten Förderelement (z.B. Rolle 11, Gurtschlitten, 21, Transportgurt 24) anliegt, um kontinuierlich in Förderrichtung FR bewegt zu werden. In einer alternativen Ausgestaltung kann die Spaltbrücke aktiv ausgebildet sein. In diesem Fall befindet sich im Spalt eine kleine Fördereinheit, die z.B. mehrere parallel angeordnete Poly-V-Riemen umfasst. Diese Riemen können dann in Förderrichtung bewegt werden und das Fördergut im Spalt mit einer Antriebskraft beaufschlagen.

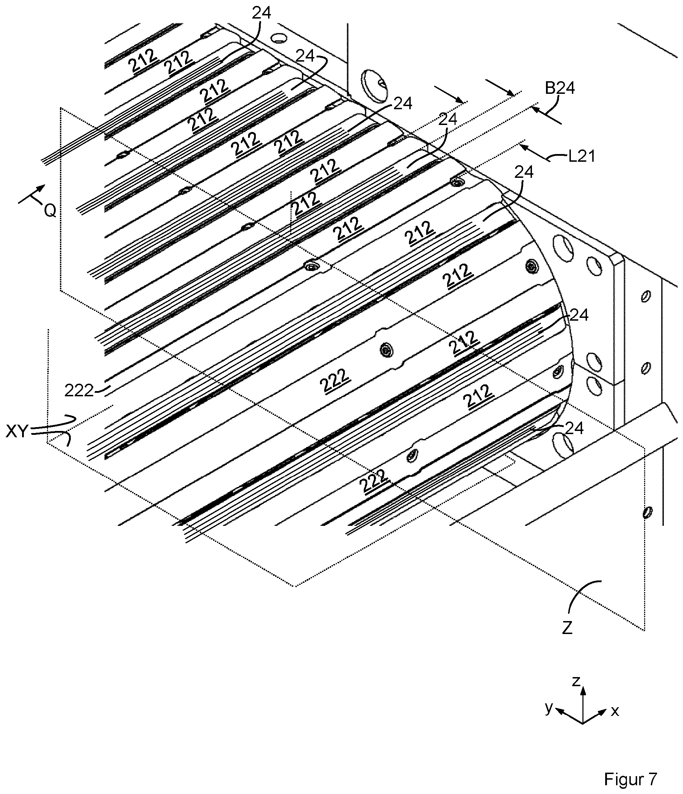

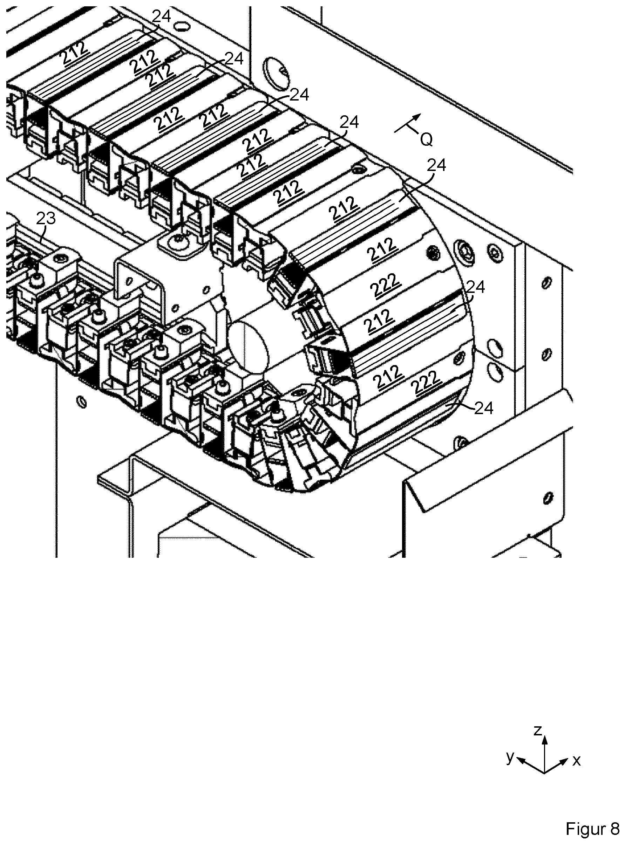

Im Förderbereich 26f können zwei aufeinanderfolgende Gurtschlitten 21 derart nah aneinander anliegen, dass eine Lückengröße einer Lücke zwischen zwei benachbarten Gurtschlitten 21 innerhalb eines vorgegebenen Maximalwerts liegt. Insbesondere ist der Maximalwert derart gering, dass kein Finger in die Lücke geraten kann. Im Umlenkbereich 25a, 25b vergrößert sich aufgrund der Kurvenbahn die Lücke zwischen den benachbarten Gurtschlitten 21 zwangsläufig, so dass sich hier eine vergrößerte Umfangslücke 25L ergeben könnte, in die ein Nutzer mit den Fingern hineingeraten kann (siehe schematisch dargestellte Hand in Figur 6). Damit in diesem Bereich keine Verletzungsgefahr entsteht ist eine Zwischenfläche 222 vorgesehen, welche die Umfangslücke 25L verschließt. In den Figuren 7 und 8 ist die Funktion der Zwischenfläche erkennbar.

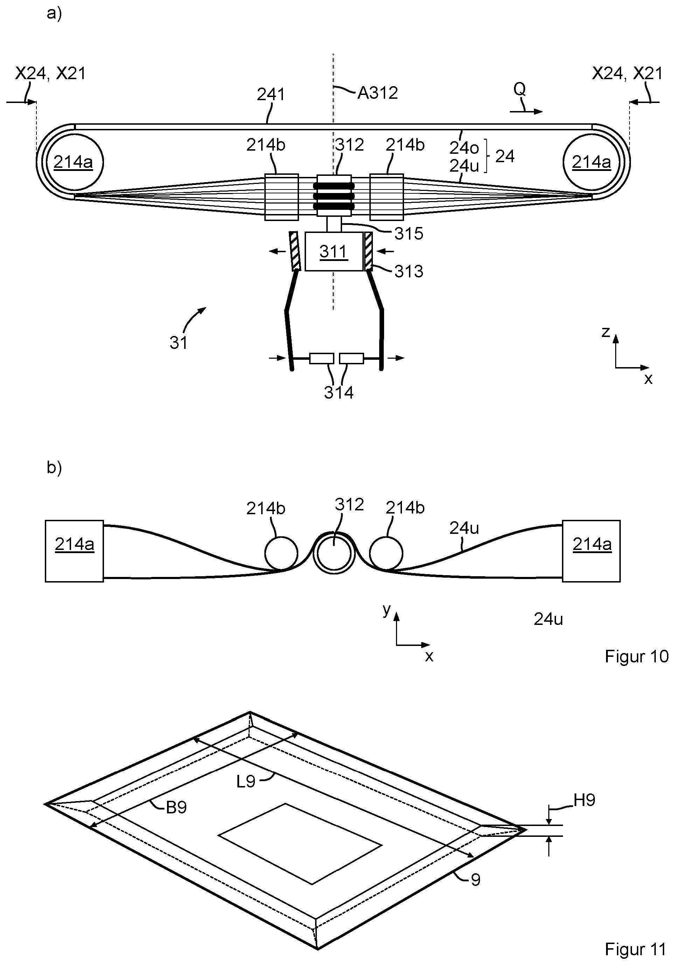

Die Zwischenfläche 222 kann insbesondere verhindern, dass ein flaches Fördergut (siehe Figur 11) in einen Spalt zwischen den Gurtschlitten hineingerät. Ein solches Hineingeraten ist insbesondere im Übernahmebereich 26a (siehe Figur 6) möglich, da hier das Fördergut erstmalig auf die Auflagefläche 241 auftrifft und gleichzeitig ein Spalt zwischen zwei Schlitten aufgrund der Umlenkung der Schlitten besonders groß sein kann.

Im Umlenkbereich 25a kann eine Schutzabdeckung 25S vorgesehen sein, welche im Umlenkbereich 25 radial außerhalb des Gurtschlittens 21 angeordnet ist. Diese wirkt wie ein Schutzblech um ein Fahrradrad und kann einen unbeabsichtigten Eingriff in die Umfangslücke verhindern.

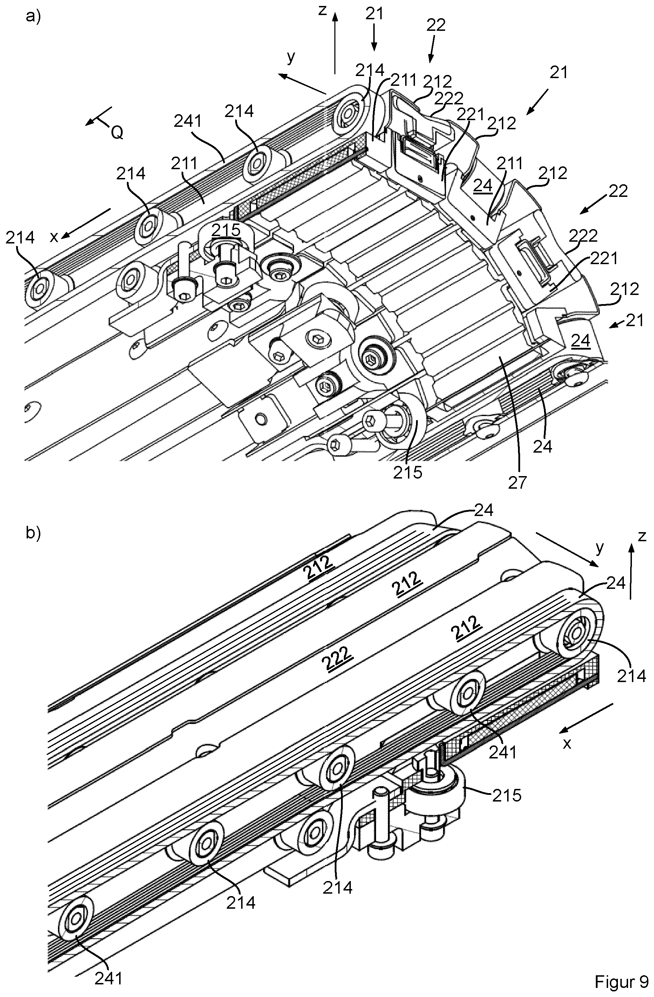

Der Gurtschlitten 21 bildet mit der Auflagefläche durch den Transportgurt sowie seitlich daneben angeordneten Führungsflächen eine geschlossene Oberfläche aus (Figuren 7, 8, 9). Die Führungsflächen 212 sind statisch an einem Gurtschlittengestell 211 des Gurtschlittens befestigt (Figur 9). Im Förderbereich liegen die Führungsflächen 212 benachbarter Gurtschlitten 21 aneinander an und bilden so eine geschlossene Fläche. Im Umlenkbereich 25 bildet sich zwischen den Führungsflächen 212 benachbarter Gurtschlitten 21 die angesprochene Umfangslücke aus, die unmittelbar verschlossen wird durch die in der Umfangslücke erscheinende Zwischenfläche 222.

Die Zwischenfläche 222 kann Teil eines optionalen Zwischenschlittens 22 sein, der zwischen zwei benachbarten Gurtschlitten 21 angeordnet ist (Figur 9). Die Zwischenfläche 222 ist auf einem Zwischenschlittengestell 221 des Zwischenschlittens gehalten. Der Zwischenschlitten 22 kann selbst über Rollen verfügen, damit der Zwischenschlitten an einer Führung 23 der Ausschleusvorrichtung 20 geführt werden kann. Alternativ ist es auch möglich, dass das Zwischenschlittengestell 221 an einem oder an beiden angrenzenden Gurtschlitten gelagert ist.

Die Figur 8 zeigt die Zwischenfläche 222 sowie die Führungsfläche 212 am Gurtschlitten 21 im Längsschnitt. Die Zwischenfläche 222 weist eine nach oben gerichtete konkave Form auf. Die Führungsfläche 212 bedeckt dabei die Zwischenfläche 222 insbesondere zur Hälfte, wenn die Schlitten außerhalb des Umlenkbereichs sind.

Es entsteht an der Zwischenfläche insbesondere eine Art Wanne, an deren Seitenwandung die Führungsflächen 212 im Förderbereich anliegen. Die Führungsfläche 212 weist auf deren Unterseite eine nach unten gerichtete Fläche auf, die mit der Zwischenfläche in Anlage ist. Im Umlenkbereich gleitet die Führungsfläche 212 an der Zwischenfläche bis zu deren äußerem Ende, wodurch die Zwischenfläche 222 von der Führungsfläche 212 freigegeben wird. Die Führungsflächen 212 sind insbesondere nach unten geneigt, um im Führungsbereich in die konkave "Wanne" der Zwischenfläche einzugreifen.

Eine Länge L20 der Ausschleusvorrichtung beträgt etwa 3 bis 5 m. Als Länge wird dabei die Länge des Förderbereichs angesehen. Etwaige Anbauteile können dabei außer Betracht bleiben.

Das Antreiben der Transportgurts 24 in Querrichtung Q kann grundsätzlich derart erfolgen, wie es in der DE 1 98 017 06 A1 beschrieben ist. Anhand der Figur 10 wird basierend darauf eine erfindungsgemäße Abwandlung dazu beschrieben.

Der Transportgurt 24 weist ein Obertrum 24a und ein Untertrum 24u auf. Das Obertrum 24o bildet die Auflagefläche 241 aus. Das Untertrum 24u ist mit einem Antriebsrad 312 kraftschlüssig antriebsverbunden. Durch Drehung des Antriebsrades 312 wird der Transportgurt 24 derart in Bewegung versetzt, dass sich die Auflagefläche 241 in Querrichtung Q bewegt.

Das Antriebsrad 312 ist mit einem Abtriebsrad 311 antriebsverbunden, wobei das Antriebsrad 312 und das Abtriebsrad 311 koaxial auf einer gemeinsamen Antriebsachse A312 angeordnet sind. Eine Zwischenschaltung eines Getriebes ist nicht erforderlich. Das Abtriebsrad 311 und das Antriebsrad 312 bewegen sich mitsamt dem Gurtschlitten in Förderrichtung FR. Das Abtriebsrad 311 und das Antriebsrad 312 sind drehfest miteinander verbunden; hier beispielhaft anhand einer Wellenverbindung 315. Das Abtriebsrad kann auch einstückig mit dem Antriebsrad verbunden sein.

Das Abtriebsrad 311 wird bedarfsweise durch stationär angeordnete Schaltklappen 313 angetrieben, wie bereits aus der DE 198 01 706 A1 bekannt. Die Schaltklappen 313 können anhand eines Klappenaktuators 314 bedarfsweise in einen Antriebszustand (die rechte Klappe in Figur 10) oder einen Leerlaufzustand (die linke Klappe in Figur 10) überführt werden. Das Abtriebsrad 311 fährt mitsamt dem Transportgurt in Förderrichtung FR an der stationären Schaltklappe 313 vorbei. Ist die Schaltklappe 313 im Antriebszustand wird ein Antriebsmoment von der Schaltklappe auf das Abtriebsrad 311 übertragen. Das Antriebsmoment dient zum Antreiben des Transportgurtes. Zur Übertragung des Antriebsmoments von der Steuerklappe 313 auf das Abtriebsrad 311 ist die Achse des Antriebsrades quer zur Förderrichtung FR auszurichten.

Das Antriebsrad und das Abtriebsrad können dabei derart dimensioniert sein, dass ein Schlupf an den Reibverbindungen zwischen der Schaltklappe 313 und dem Abtriebsrad 311 bzw. zwischen dem Antriebsrad 312 und dem Transportgurt 24 und ein damit einhergehender Drehzahlverlust durch eine erhöhte Übersetzung ausgeglichen wird.

Erfindungsgemäß ist das Untertrum 24u gegenüber dem Obertrum 24o tordiert, insbesondere um 90°. Somit ist es möglich, dass das Antriebsrad 312 koaxial mit dem Antriebsrad 311 ausgerichtet ist und zugleich kraftübertragend mit dem Untertrum 24z in Verbindung ist. Ein Kegelradgetriebe wie in der DE 19801706 A1 wird damit obsolet. Die Tordierung des Untertrums wird durch die geringe Breite des Transportsgurts erst ermöglicht. Zudem müsste ein Kegelradgetriebe sehr klein ausgebildet sein, um in der vorliegenden Ausgestaltung Platz zu finden.

Zur Führung des Transportgurtes sind unterschiedliche Gurtrollen 214 vorgesehen. Erste Gurtrollen 214a sind vorgesehen, um das Obertrum 24o derart zu führen, dass dieses die Auflagefläche 241 bilden kann, die in der Förderebene FE angeordnet ist. Zweite Gurtrollen 214b sind vorgesehen, die das Untertrum derart führen, dass dieses kraftübertragend mit dem Antriebsrad 312 in Kontakt ist und insbesondere abschnittsweise um das Antriebsrad 312 herumgeschlungen ist. Die Drehachse der ersten Gurttolle 214a und die Drehachse A312 der Antriebswelle sind quer zueinander ausgerichtet.

Figur 4a zeigt das Fördergut 9 mit schematischen Geschwindigkeitsvektoren während dessen Fördervorgangs auf der Ausschleusvorrichtung 20. Die Größe vF bezeichnet die Geschwindigkeit in Förderrichtung FR; vQ bezeichnet die Geschwindigkeit des Förderguts 9 in Querrichtung Q; v9 bezeichnet die Absolutgeschwindigkeit als Resultat einer Vektoraddition der vorbezeichneten Teilgeschwindigkeiten vF, vQ.

Figur 4b zeigt ein Diagramm der Geschwindigkeiten vF, vQ, v9 während eines Ausschleusvorgangs des Fördergutes auf der erfindungsgemäßen Ausschleusvorrichtung. In einer ersten Phase I wird das Fördergut 9 auf dem Gurtschlitten in Förderrichtung FR gefördert. Die Absolutgeschwindigkeit v9 entspricht der Geschwindigkeit vF in Förderrichtung, die durch die Bewegung des Gurtschlittens in Förderrichtung vorgegeben ist.

In einer zweiten Phase II ist der Transportgurt angetrieben, wodurch das Fördergut auch in Querrichtung mit einer Geschwindigkeit vQ bewegt wird. Durch Vektoraddition ergibt sich eine Absolutgeschwindigkeit v9, die größer ist als die Geschwindigkeit vF in Förderrichtung.

In einer dritten Phase III hat das Fördergut 9 die Förderstrecke verlassen und wird durch den Gurtschlitten nicht mehr in Förderrichtung bewegt. Das Fördergut wird im Vergleich zur zweiten Phase II mit geringerer Absolutgeschwindigkeit v9 weiterbefördert. Die Geschwindigkeiten vF und vQ sind abhängig von der Ausrichtung des Ausschleusbereichs 94. Eine Breite B24 des Transportgurtes in Förderrichtung FR beträgt insbesondere 16 mm (Figur 7) . Eine Länge L21 des Gurtschlittens in Förderrichtung beträgt insbesondere 50 mm (Figur 7). Eine Erstreckung X21 des Gurtschlittens in Querrichtung beträgt insbesondere 1.000 mm (Figur 10). Eine Erstreckung X24 des Transportgurts in Querrichtung beträgt insbesondere 1.000 mm (Figur 10).

Figur 11 zeigt ein kleinstmögliches Fördergut 9, welches in einer Ausgestaltung mit der erfindungsgemäßen Ausschleusvorrichtung bestimmungsgemäß gefördert und bedarfsweise ausgeschleust wird. Das Fördergut 9 wird dabei derart herangefördert, dass die Höhe H9 des Förderguts als kleinste Erstreckung nach vertikal oben ragt.

Die Höhe H9 kann beliebig klein sein. Insbesondere bei einem Transportkuvert kann die Höhe wenige Millimeter, insbesondere weniger als 10 mm, betragen. Die Länge L9 sowie die Breite B9 des Förderguts werden im Rahmen der Anmeldung als Seitenlänge bezeichnet, auf die es im Folgenden ankommt. Die Höhe H9 ist keine relevante Seitenlänge, da diese für die Auflagefläche ohne Relevanz ist.

Die Breite B9 stellt dabei die kleinere der Seitenlängen dar; die Länge L9 ist dabei die größere der Seitenlängen. Auch in einem Extrembeispiel ist die Breite B9 nicht kleiner als die Höhe H9 und nicht größer als die Länge L9. In einem Extremfall könnte die Breite B9 gleich der Länge L9 und der Höhe H9 sein, dann wäre das Fördergut z.B. ein Würfel und die folgende Bedingung gilt auch.

Das Fördergut 9 wird derart herangefördert dass dieses mit derjenigen Fläche auf der Förderebene zum Liegen kommt, die durch die beiden Seitenlängen L9, B9 aufgespannt wird. Mithin ist dies die größte Seitenfläche. Sollte das Fördergut einmal auf einer der anderen kleineren Seitenflächen zur Anlage kommen, so wird in der Regel spätestens bei Übertritt auf die Ausschleusvorrichtung das Fördergut umgekippt, so dass das Fördergut mit der größten Seitenfläche auf der Förderebene aufliegt.

Die Dimension der Grundfläche ist dabei entscheidend bei der Beurteilung, ob das Fördergut zuverlässig gefördert bzw. ausgeschleust werden kann. Denn bei einem Fördergut mit einer zu kleinen "kleinsten" Seitenlänge / Breite B9 besteht die Gefahr, dass dieses nicht zuverlässig auf zwei Transportgurten 24 gleichzeitig zur Anlage kommt, und somit reibbehaftet auf der quer unbewegbaren Führungsfläche 212 (Figur 8) zur Anlage kommt. In diesem Fall ist eine zuverlässige Ausschleusung nicht möglich.

Ein beispielhaftes Fördergut für die Verwendung der Ausschleusvorrichtung hat eine kleinste Seitenlänge B9 von 120 mm und eine Höhe von 4 mm.

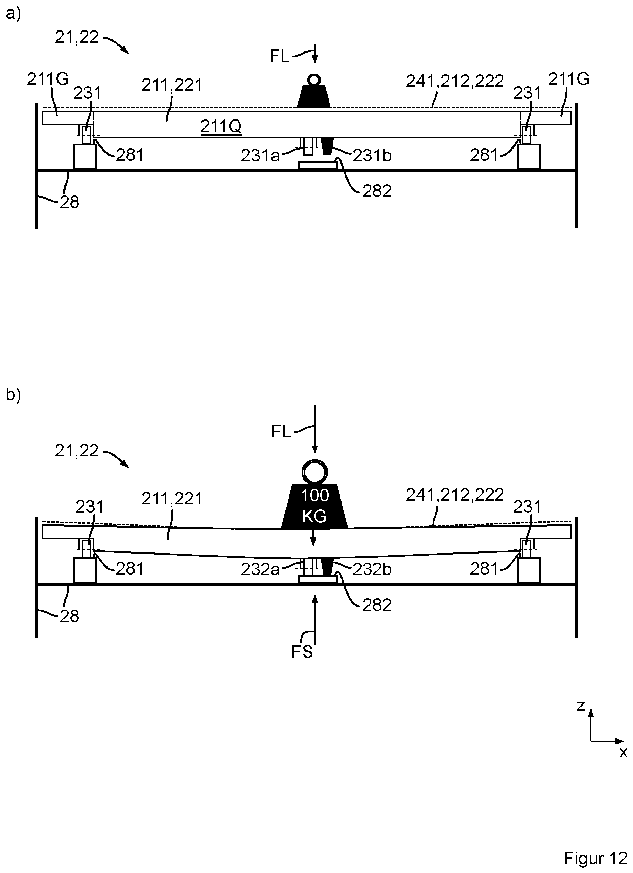

Figur 12a zeigt schematisch Details einer Ausgestaltung der vorbeschriebenen Ausschleusvorrichtung in einem Normalbetriebszustand. Dargestellt ist ein Schlitten 21, 22, wobei es sich hierbei wahlweise um den Gurtschlitten 21 oder den Zwischenschlitten 22 handeln kann. Insofern ist die Ausgestaltung auch auf beide Arten von Schlitten anwendbar. Der Schlitten weist Führungsrollen 231, auf, die sich an Führungsflächen 281 des Gestells 28 abstützen. Eine umgekehrte Ausgestaltung ist auch denkbar, bei der sich Führungsflächen des Schlittens an Führungsrollen des Gestells abstützen. Zudem können anstelle der Führungsrollen auch Gleitelemente vorgesehen sein. Zusammenfassend wird hierbei von einer Hauptführung 231, 281 des Schlittens 21, 22 gegenüber dem Gestell 28 gesprochen. Die gesamte Lastkraft FL einer Last wird über die Hauptführung 231, 281 abgestützt.

Eine Anforderung an die Stabilität der Ausschleusvorrichtung besteht beispielsweise insbesondere darin, dass eine auf der Förderfläche stehende Person zu tragen ist, beispielsweise zu Wartungszwecken.

Da der Schlitten ein bewegtes Teil ist, sollte dieser möglichst leicht gebaut sein. Zudem, wie oben ausgeführt, besteht ein wesentlicher Vorteil in der geringen Baugröße des Schlittens. Daraus ergibt sich ein zu lösender Zielkonflikt.

Ferner ist es zu berücksichtigen, dass für eine gute Spurtreue ein möglichst großer Rollenabstand in X-Richtung wünschenswert ist; zugleich soll die Anzahl der Rollen möglichst gering sein, um die Geräusche, Reibung und Kosten gering zu halten.

Figur 12b zeigt die Darstellung aus Figur 12a in einem Sonderzustand, bei der beispielsweise eine Person mit den Füßen auf die Ausschleusvorrichtung auftritt, beispielsweise auf der Auflagefläche 241 des Transportgurt 24, auf der Führungsfläche 212 des Gurtschlittengestells oder auf der Zwischenfläche 222 des Zwischenschlittens 22. Punktuell kann hierbei eine Gewichtsbelastung von 100 kg und mehr auftreten.

Die Schlitten 21, 22 weisen dazu eine Bedarfsführung 232, 282 auf. Die Bedarfsführung umfasst eine Bedarfsstütze 232 sowie eine Bedarfsfläche 282. Die Bedarfsstütze 232 kann eine Rolle 232a oder ein statisches Stützelement 232b, beispielsweise ein Gleitblock, umfassen. Es ist ersichtlich, dass die Bedarfsstützte eingerichtet ist, erst dann in einem lastabstützenden Zustand gerät, wenn die auf den Schlitten aufgebrachte Last einen gewissen Wert annimmt (Sonderzustand nach Figur 12b). Im lastabstützenden Zustand stellt die Bedarfsstütze eine Stützkraft FS bereit. Nun gerät die Bedarfsstütze 232 in Kontakt mit der Bedarfsfläche 282. Dies wird bedingt durch eine gezielte Elastizität innerhalb des Schlittens 21, 22.

In der Ausgestaltung nach Figur 12 ist das Schlittengestell 211, 221 dasjenige Element, welches durch eine Biegbarkeit die erforderliche Elastizität bereitstellt.

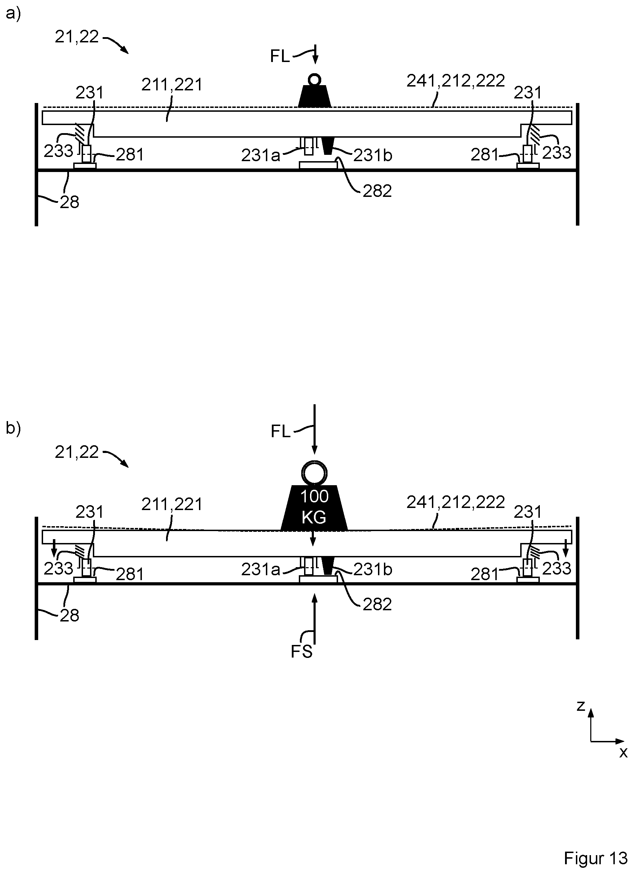

Figur 13 zeigt dazu eine Abwandlung. Der Schlitten 21, 22 weist hierbei ein Federelement 233 auf, anhand dem die Rollen der Hauptführung 231 elastisch am Schlittengestell 211, 221 gehalten sind. Es erfolgt dann im Falle einer Überlast eine vertikale Verlagerung des gesamten Schlittengestells nach unten (Figur 13b), bis die Bedarfsführung 232, 282 in den lastabstützenden Zustand gerät. Dabei werden die Federelemente 233 aufgrund der Überlast elastisch verformt.

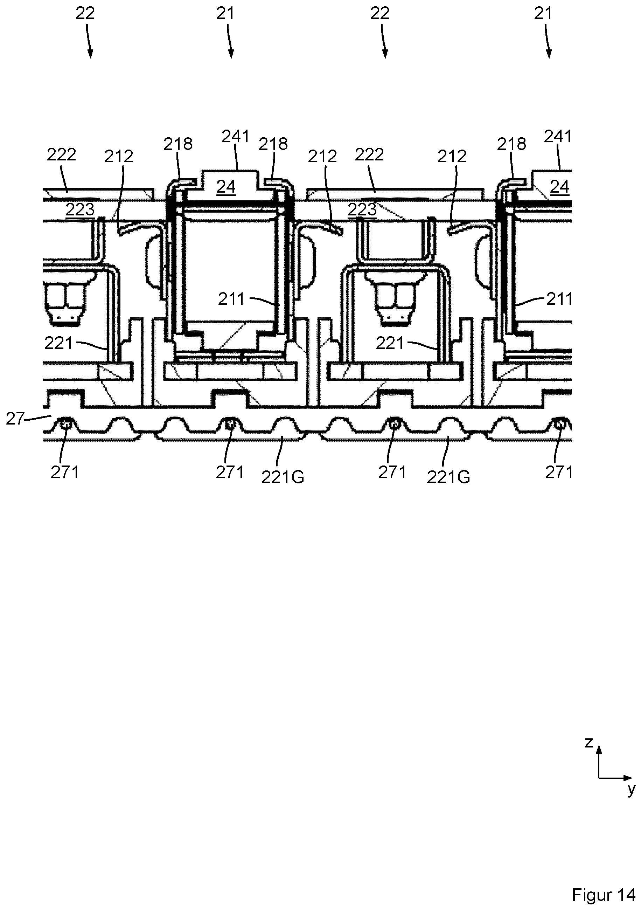

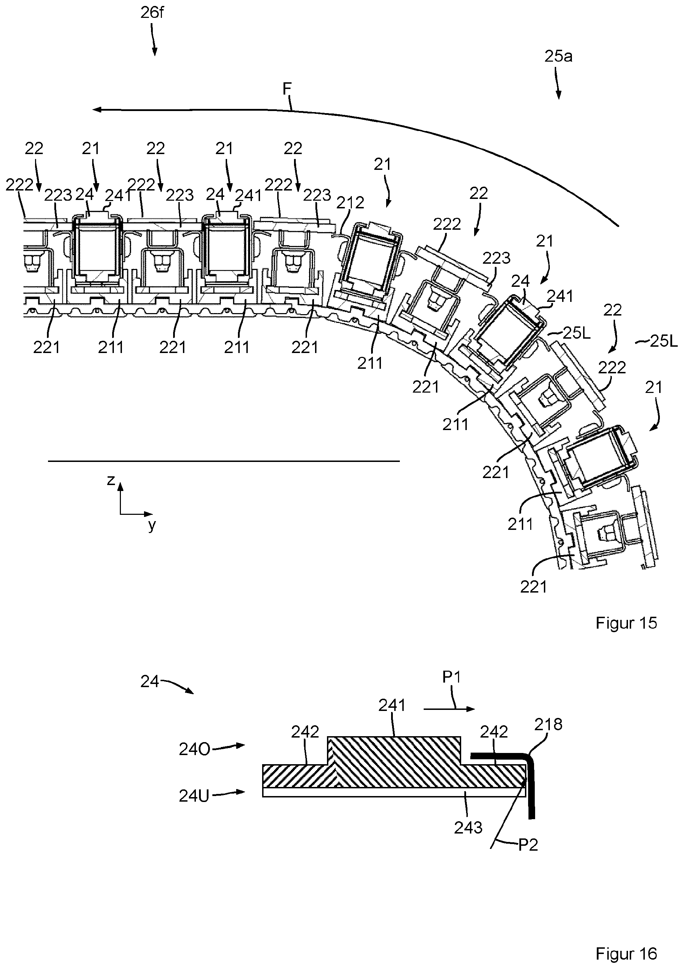

Die Figuren 14 und 15 zeigen eine Ausgestaltung der Schlitten im Querschnitt, die sich von den Schlitten wie dargestellt in den Figuren 7 bis 9 unterscheiden. Im Folgenden wird nur auf die Unterscheide eingegangen. Die Beschreibung der übrigen Merkmale und die Funktionsweise ist insofern auch für die vorliegende Ausgestaltung anwendbar.

Zur besseren Darstellung enthält die Figur 16 eine vergrößerte Darstellung des Querschnitts des Transportgurts 24.

Der Transportgurt 24 weist an einer Oberseite 24O, die die Auflagefläche 241 ausbildet, einen gestuften Verlauf auf. So bildet ein zentraler Abschnitt der Oberseite 24O die Auflagefläche 241 aus. Links und rechts daneben ist ein jeweils eine Haltefläche 242 ausgebildet. Die Auflagefläche 241 steht von der Haltefläche 242 nach oben hervor. Die Haltefläche 242 sowie die Auflagefläche 241 sind in Längsrichtung des Transportgurts 24 (= Querrichtung Q, siehe Figur 7) parallel zueinander ausgerichtet.

Der Transportgurt 24 weist an einer Unterseite 24U in regelmäßigen Abständen nach unten ragende Antriebsvorvorsprünge 243 auf. Insofern handelt es sich bei dem Transportgurt 24 insbesondere um einen Zahnriemen. Der Transportgurt 24 ist über eine formschlüssige Antriebsverbindung mit dem Antriebsrad 312 (siehe Figur 10) verbunden. Das Antriebsrad 312 ist dazu als Zahnrad ausgebildet. Aufgrund der formschlüssigen Antriebsverbindung kann die Spannung des Transportgurtes gering gehalten werden. Dies wirkt sich günstig auf Reibung und Dynamik (schnelle Beschleunigung des Riemens) aus.

Die Ausschleusvorrichtung wird mit einer vergleichsweise großen Fördergeschwindigkeit betrieben. Zudem ist der Umlenkradius U20 (siehe Figur 6) vergleichsweise gering. Dies führt im Umlenkbereich 52a, 25b zu hohen Fliehkräften C (Figur 15), die im Umlenkbereich 25a, 25b (siehe auch Figur 6) auf den Schlitten 21, 22 und deren Komponenten wirken.

Insbesondere ist die Fliehkraft C zu beachten für das Obertrum des Transportgurts, da dieses der Fliehkraft C folgen könnte.

Die freie Bewegbarkeit des Obertrums des Transportgurts 24 der Fliehkraft C folgend wird nun durch einen Niederhalter 218 begrenzt. Der Niederhalter 218 ist oberhalb der Haltefläche 242 angeordnet. Wenn der Gurtschlitten 21 im ebenen Förderbereich 26f angeordnet ist, wirkt auf den Gurtschlitten 11 keine Fliehkraft. Sobald der Gurtschlitten in einen der Umlenkbereiche 25a, 25b gerät beaufschlagen die Fliehkräfte C den Transportgurt 24 nach radial außen (Figur 15).

Der Niederhalter 218 begrenzt ein fliehkraftbedingtes Abheben von Abschnitten des Transportgurtes 24. Dies reduziert eine mögliche Geräuschbildung, da andernfalls der abhebende Transportgurt 24 in Schwinungen geraten kann. Im Förderbereich 26f ist der Transportgurt mit Spiel gegenüber dem Niederhalter 218 angeordnet. Der Niederhalter 218 erzeugt damit keine nennenswerte Reibung, wenn der Transportgurt in Querrichtung Q bewegt wird. Eine Bewegung des Transportgurtes 24 in Querrichtung, während sich der Transportgut 24 im Umlenkbereich 25a befindet, ist nicht erforderlich, so dass die fliehkraftbedingte Anlage des Transportgurts 24 am Niederhalter 218 hier keine nachteilige Auswirkung hervorruft.

Der Transportgurt 24 soll zum einen eine gute reibbehaftete Verbindung mit dem Fördergut eingehen können; andererseits soll der Transportgurt möglichst reibungsarm auf dem Gurtschlitten gehalten sein.

Der Transportgurt 24 ist nun an seiner Oberseite 24O mit vergleichsweise hoher Reibfähigkeit ausgebildet, während der Transportgurt an seiner Unterseite 24U mit vergleichsweise geringerer Reibfähigkeit ausgebildet ist. Die Reibfähigkeit stellt im Rahmen dieser Anmeldung dabei ein Maß dar, wie groß der Reibwert mit einem identischen Reibpartner ausfallen wird. Ein Material mit großer Reibfähigkeit wird mit einem identischen Reibpartner (z.B. Stahl) einen höheren Reibwert ausbilden als ein Material mit geringerer Reibfähigkeit.

Die unterschiedlichen Reibfähigkeiten können durch unterschiedliche Maßnahmen erzielt werden. So können die unterschiedlichen Reibwerte durch unterschiedliche Oberflächenbeschaffenheiten (rau oder glatt, beschichtet oder unbeschichtet) an der jeweiligen Fläche hergestellt werden. Alternativ kann die Oberseite 24O des Transportgurt 24 durch ein anderes Material gebildet sein als die Unterseite 24U des Transportgurts 24.

Der Niederhalter 18 ist dabei vorzugsweise derart ausgebildet und angeordnet, dass bei einer seitlichen Auslenkung des Transportgurts (Pfeil P1 in Figur 16) der Transportgurt 24 mit der reibarmen Unterseite 24U in Kontakt mit dem Niederhalter gerät (Pfeil P2 in der Figur 16) und nicht mit der reibstärkeren Oberseite 24O.

In der Ausgestaltung der Figuren 14 und 15 ist die Führungsfläche 222 am Gurtschlitten 21 angebracht. Wenn der Gurtschlitten 21 im Förderbereich 26f ist, ist die Führungsfläche 212 unter der Zwischenfläche 222 angeordnet.

Am Zwischenschlitten 22 ist die Zwischenfläche 222 angeordnet. Ein zwischen dem Zwischenschlitten 22 und dem Gurtschlitten 21 vorhandene Umfangslücke wird von der Zwischenfläche 222 und der Führungsfläche 212 bedeckt. Zusätzlich ist ein Elastomerelement 223 vorgesehen, welche dazu beitragen kann, dass die Umfangslücke zwischen der Zwischenfläche 222 und dem Gurtschlitten bedeckt wird. Dabei ist das Elastomerelement 223 unter der Zwischenfläche 222 angeordnet und überlappt die Zwischenfläche in Förderrichtung F betrachtet. Eine Überlappung findet dabei unabhängig davon statt, ob sich die jeweiligen Schlitten im Umlenkbereich 25a oder im Förderbereich 26f befinden.

Das Elastomerelement 223 kann daher sowohl mit Teilen des Gurtschlittens als auch mit Teilen des Zwischenschlittens in Kontakt geraten, die miteinander relativ bewegt werden. In Ausgestaltungen kann diese Berührung unvermeidlich sein. Dabei ist zu berücksichtigen, dass die Schlitten vielfach bewegbar sind und eine sehr exakte Führung nur unter Einhaltung extremster Toleranzen umsetzbar wäre. Ein Halten auf Abstand wäre daher nur mit vergleichsweise hohen Spalten möglich, was wiederum aus Sicherheitsgründen nicht erwünscht ist.

Durch die Ausbildung als Elastomerelement ergibt sich ein geräuschmindernder Effekt. Gleichzeitig bleibt die Zwischenfläche 222 als dasjenige Element erhalten, welches in Kontakt mit dem Fördergut kommen kann, da die Zwischenfläche oberhalb des Elastomerelements 223 angeordnet ist. Insbesondere ist die Zwischenfläche aus einem Metall oder einem Kunststoff mit vergleichsweise glatter bzw. reibungsarmer Oberfläche ausgebildet.

In einer alternativen Ausgestaltung ist es möglich, dass das Elastomerelement 223 jeweils am Gurtschlitten 21 angeordnet ist und in Richtung des Zwischenschlittens 22 hervorragt. Die Führungsfläche 212 ist dann am Zwischenschlitten 22 angeordnet.

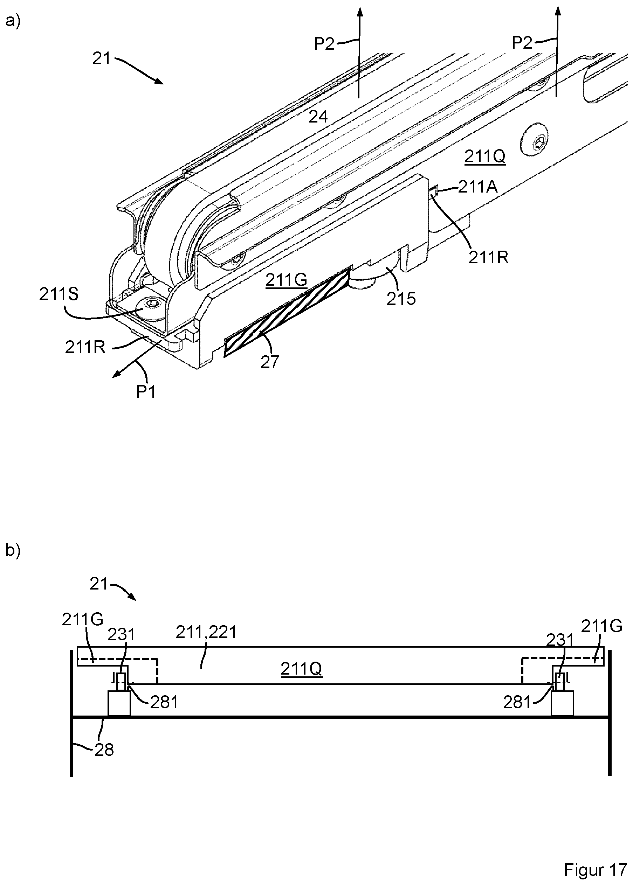

Figur 17a zeigt einen Ausschnitt des Gurtschlitten 21 in einer Ausgestaltung, wobei die folgenden Ausführungen soweit wie möglich auch für den Zwischenschlitten 22 gelten. Der grundsätzliche Aufbau des Schlittens ist auch in Figur 17b ersichtlich.

Das Gurtschlittengestell 211 ist mehrteilig aufgebaut und umfasst links und rechts jeweils einen Grundträger 211G, der insbesondere eine Art Fahrwerk ausbildet. Die Grundträger 211G können mit Abstand zueinander angeordnet sein oder auch miteinander fest verbunden sein. Am Grundträger 211G sind jeweils die Rollen 215 zur Führung des Schlittens am Gestell 28 (Figur 5) angebracht. Auch kann die Befestigung des Gurtschlittens 21 an dem Antriebsriemen 27 am Grundträger 211G erfolgen.

Zwischen den beiden Grundträgern 211G ist ein Querträger 211Q angeordnet, der insbesondere den Abstand der beiden Grundträger 211G zueinander überspannt. Am Querträger ist der Transportgurt 24 befestigt. Insbesondere befindet sich am Querträger 211Q auch die gesamte Führung und der Antrieb des Transportgurts 24, die beispielsweise in Figur 10, 10 gezeigt ist.

Der Querträger 211Q kann separat zu dem Grundträger 211G von der Ausschleusvorrichtung entnommen werden. Dazu ist zunächst eine Sicherungsschraube 211S zu lösen, die den Querträger 211Q an dem Grundträger 211G befestigt. Nach Lösen der Sicherungsschraube wird ein Riegel 211R, der im vorliegenden Fall beweglicher Bestandteil des Grundträgers 211G sein kann, aus einer Riegelposition in eine Freigabeposition überführt (Pfeil P1 in Figur 17a). Zu erkennen ist die Riegelausnehmung 211A am Querträger 211Q, in die der Riegel nur in der Riegelposition, nicht in der Freigabeposition eingreift. Nach Überführen des Riegels in die Freigabeposition kann der Querträger 211Q mitsamt dem Transportgurt 24 von der Ausschleusvorrichtung entnommen werden (Pfeile P2 in Figur 17a), beispielsweise zu Wartungszwecken.

Figur 14 verdeutlicht die Verbindung des Antriebsriemens 27 mit dem jeweiligen Schlitten, insbesondere dem Gurtschlitten 21 und/oder dem Zwischenschlitten 22. Der Antriebsriemen 27 ist als Zahnriemen ausgebildet. In die Zähne des Antriebsriemens greift ein Verbindungszapfen 271 ein. Der Verbindungszapfen 271 ist fest mit dem jeweiligen Schlitten verbunden. Sofern der Schlitten mehrteilig ausgebildet wie insbesondere in Figur 17 gezeigt ist, kann der Verbindungszapfen am Grundträger 211G befestigt sein, so dass die mit Bezug auf Figur 17 vorgestellte separate Entnehmbarkeit des Querträgers möglich ist.

### Bezugszeichenliste

- 1: Förderanlage
- 3: Ausschleußbereich
- 9: Fördergut
- 10: Förderstrecke
- 11: Förderrolle
- 12: Spaltbrücke
- 20: Ausschleusvorrichtung
- 201: Förderfläche
- 21: Gurtschlitten
- 211: Gurtschlittengestell
- 211G: Grundträger
- 211Q: Querträger
- 211S: Sicherungsschraube
- 211R: Riegel
- 211A: Riegelausnehmung
- 212: Führungsfläche
- 214: Gurtrolle
- 215: Querführungsrolle

- 218: Niederhalter
- 22: Zwischenschlitten
- 221: Zwischenschlittengestell
- 222: Zwischenfläche
- 223: Elastomerelement
- 23: Führung
- 231: Führungsrolle
- 232: Bedarfsstütze
- 233: Federelement
- 24: Transportgurt
- 24o: Obertrum
- 24u: Untertrum
- 24O: Oberseite
- 24U: Unterseite
- 241: Auflagefläche
- 242: Haltefläche
- 243: Antriebsvorsprung
- 25a, 25b: Umlenkbereich
- 25L: Umfangslücke
- 25S: Schutzabdeckung
- 26a: Übernahmebereich
- 26f: Förderbereich
- 26b: Übergabebereich
- 27: Antriebsriemen
- 271: Verbindungszapfen
- 28: Gestell
- 281: Führungsfläche
- 282: Bedarfsfläche
- 29: Antrieb
- 291: Motor
- 292: Getriebe
- 311: Abtriebsrad
- 312: Antriebsrad
- 313: Schaltklappe
- 314: Klappenaktuator
- 315: Wellenverbindung

- 90: nicht beanspruchter Quergurtsorter
- 91: Förderwagen
- 92: Quergurt
- 93: Ausschleusstation
- 94: Ausschleusbereich
- 97: Verbindungsstelle
- 98: Einschleusförderstrecke
- 99: Einschleusbereich

- v: Geschwindigkeit
- v9: absolute Fördergutgeschwindigkeit
- vF: Geschwindigkeit in Förderrichtung
- vQ: Geschwindigkeit quer zur Förderrichtung
- B24: Breite des Transportgurtes in Förderrichtung
- L21: Länge des Gurtschlittens in Förderrichtung
- X21: Erstreckung des Gurtschlittens in Querrichtung
- X24: Erstreckung des Transportgurts in Querrichtung
- FR: Förderrichtung
- FE: Förderebene
- Q: Querrichtung
- E: Einschleusrichtung
- A: Ausschleusrichtung
- R: Rückpfad
- U20: Umlenkradius (Krümmungsradius im Umlenkbereich)
- UB: Umlaufbahn
- U: Umlenkachse
- W: Wendekreisradius
- A312: Antriebsachse des Antriebrades 312
- H9: Höhe des Förderguts
- B9: kleinste Seitenlänge / Breite des Förderguts
- L9: größte Seitenlänge / Länge des Förderguts
- L20: Länge der Ausschleusvorrichtung
- FS: Stützkraft
- FL: Lastkraft
- C: Fliehkraft

## Patentansprüche

1. Ausschleusvorrichtung (20), eingerichtet
- zur Übernahme eines Förderguts (9) an einem Übernahmebereich (26a) von einer vorgelagerten Förderstrecke (10a),
- zur zumindest zeitweisen Förderung des Förderguts (9) innerhalb eines Förderbereichs (26f) in einer Förderrichtung (FR) und insbesondere in einer Förderebene (FE), und
- zur selektiven Ausschleusung des Förderguts (9) in Richtung eines in Förderrichtung (FR) seitlich angeordneten Ausschleusbereichs (3),
die Ausschleusvorrichtung (20) umfasst
eine Mehrzahl an Gurtschlitten (21), die umlaufend entlang einer Führung (23) derart angeordnet sind, dass die Gurtschlitten (21) zumindest zeitweise, insbesondere im Förderbereich (26f), in Förderrichtung (FR) verfahren,
der Gurtschlitten (21) umfasst einen Transportgurt (24),
wobei der Transportgurt (24) zumindest zeitweise eine Auflagefläche (241) für das Fördergut (9) ausbildet,
wobei zur selektiven seitlichen Ausschleusung des Fördergutes (9) der Transportgurt (24) in einer Querrichtung (Q) quer zur Förderrichtung (FR), insbesondere und zugleich parallel zu einer Förderebene (FE), selektiv bewegbar ist,
wobei der Transportgurt (24) durch ein Antriebsrad (312) angetrieben wird, **dadurch gekennzeichnet,**
**dass** der Transportgurt (24) derart auf dem Gurtschlitten (21) geführt ist, dass der Transportgurt (24) zwischen der Auflagefläche (241) und dem Antriebsrad (312) tordiert wird.

2. Ausschleusvorrichtung (20) nach dem vorherigen Anspruch,
**dadurch gekennzeichnet,**
**dass**, während der Gurtschlitten (21) im Förderbereich (26f) angeordnet ist, das Antriebsrad (312) drehbar um eine quer zur Förderrichtung (FR) ausgerichtete Antriebsachse (A312) gelagert ist.

3. Ausschleusvorrichtung (20) nach einem der vorherigen Ansprüche,
**dadurch gekennzeichnet,**
**dass**, während der Gurtschlitten (21) im Förderbereich (26f) angeordnet ist, eine Gurtrolle (214a) zur Führung eines Obertrums (24o) des Transportgurts (24) parallel zur Förderrichtung (FR) ausgerichtet ist.

4. Ausschleusvorrichtung (20) nach einem der vorherigen Ansprüche,
**dadurch gekennzeichnet,**
**dass** das Antriebsrad (311) selektiv durch eine stationäre Steuerklappe (313) antreibbar ist.

5. Förderanlage (1), umfassend
eine erste Förderstrecke (10a),
eine Ausschleusvorrichtung nach einem der vorherigen Ansprüche,
wobei die Förderanlage (1) eingerichtet ist,
dass das Fördergut (9) von der ersten Förderstrecke (10a) an die Ausschleusvorrichtung (20) in der Förderrichtung (FR) und in der Förderebene (FE) bereitgestellt wird,
insbesondere dass das Fördergut (9) von der ersten Förderstrecke (10a) an die Ausschleusvorrichtung (20) in der Förderrichtung (FR) und in der Förderebene (FE) herangefördert wird.

6. Förderanlage (1) nach dem vorherigen Anspruch, umfassend
eine zweite Förderstrecke (20a),
wobei die Förderanlage (1) eingerichtet ist,
dass das Fördergut (9) von der Ausschleusvorrichtung (20) an die zweite Förderstrecke (10b) in der Förderrichtung (FR) und in der Förderebene (FE) bereitgestellt wird,
insbesondere dass das Fördergut (9) von der zweiten Förderstrecke (10b) in der Förderrichtung (FR) und in der Förderebene (FE) wegbefördert wird.

7. Verwendung einer Ausschleusvorrichtung (20) oder einer Förderanlage (1) nach einem der vorherigen Ansprüche zur Übernahme eines Förderguts (9) an der Übernahmestelle (26a),
zur zumindest zeitweisen Förderung des Förderguts (9) in der Förderrichtung (FR), und
zur selektiven Ausschleusung des Förderguts (9) in den Ausschleusbereich (3), der in Draufsicht betrachtet seitlich zur Förderrichtung (FR) angeordnet ist.

8. Verwendung nach dem vorherigen Anspruch,
wobei ein kleinstmögliches Fördergut (9) derart dimensioniert ist, dass es in einem Förderbereich (26f) stets auf zwei Transportgurten (24) von zwei benachbarten Gurtschlitten (21) aufliegt.

9. Verwendung nach einem der beiden vorherigen Ansprüche,
wobei ein kleinstmögliches Fördergut (9) derart dimensioniert ist, dass eine in Draufsicht betrachtet kleinste Seitenlänge (B9) maximal max. 120 mm, insbesondere max. 90 mm beträgt.

## Claims

1. A discharge device (20) that is designed
- to transfer goods (9) to be conveyed from an upstream conveyor section (10a) at a transfer region (26a),
- to at least intermittently convey the goods (9) to be conveyed in a conveying direction (FR) and, in particular, in a conveying plane (FE) within a conveyor region (26f), and
- to selectively discharge the goods (9) to be conveyed in the direction of a discharge region (3) arranged laterally in the conveying direction (FR),
with the discharge device (20) comprising
a plurality of belt slides (21) that are arranged in a revolving manner along a guide (23) in such a way that the belt slides (21) at least intermittently move in the conveying direction (FR), particularly in the conveyor region (26f), and with the belt slide (21) comprising a conveyor belt (24),
wherein the conveyor belt (24) at least intermittently forms a support surface (241) for the goods (9) to be conveyed,
wherein the conveyor belt (24) is selectively movable in a transverse direction (Q) extending transverse to the conveying direction (FR) and, in particular, simultaneously parallel to a conveying plane (FE) in order to selectively discharge the goods (9) to be conveyed laterally, and
wherein the conveyor belt (24) is driven by a driving wheel (312),
**characterized in**
**that** the conveyor belt (24) is guided on the belt slide (21) in such a way that the conveyor belt (24) is twisted between the support surface (241) and the driving wheel (312).

2. The discharge device (20) according to the preceding claim,
**characterized in**
**that** the driving wheel (312) is mounted so as to be rotatable about a driving axle (A312) oriented transverse to the conveying direction (FR) while the belt slide (21) is arranged in the conveyor region (26f).

3. The discharge device (20) according to one of the preceding claims,
**characterized in**
**that** a belt roll (214a) for guiding an upper run (24o) of the conveyor belt (24) is oriented parallel to the conveying direction (FR) while the belt slide (21) is arranged in the conveyor region (26f).

4. The discharge device (20) according to one of the preceding claims,
**characterized in**
**that** the driving wheel (311) can be selectively driven by means of a stationary control flap (313).

5. A conveyor system (1), comprising
a first conveyor section (10a) and
a discharge device according to one of the preceding claims,
wherein the conveyor system (1) is designed
to deliver the goods (9) to be conveyed from the first conveyor section (10a) to the discharge device (20) in the conveying direction (FR) and in the conveying plane (FE),
particularly to convey the goods (9) to be conveyed from the first conveyor section (10a) toward the discharge device (20) in the conveying direction (FR) and in the conveying plane (FE).

6. The conveyor system (1) according to the preceding claim, comprising
a second conveyor section (20a),
wherein the conveyor system (1) is designed
to deliver the goods (9) to be conveyed from the discharge device (20) to the second conveyor section (10b) in the conveying direction (FR) and in the conveying plane (FE),
particularly to convey the goods (9) to be conveyed away from the second conveyor section (10b) in the conveying direction (FR) and in the conveying plane (FE).

7. A use of a discharge device (20) or a conveyor system (1) according to one of the preceding claims for transferring goods (9) to be conveyed at the transfer point (26a) in order
to at least intermittently convey the goods (9) to be conveyed in the conveying direction (FR) and
to selectively discharge the goods (9) to be conveyed into the discharge region (3), which is arranged laterally to the conveying direction (FR) in a top view.

8. The use according to the preceding claim,
wherein the smallest possible goods (9) to be conveyed are dimensioned in such a way that they always rest on two conveyor belts (24) of two adjacent belt slides (21) in a conveyor region (26f).

9. The use according to one of the two preceding claims,
wherein the smallest possible goods (9) to be conveyed are dimensioned in such a way that a smallest side length (B9) amounts to no more than 120 mm, particularly no more than 90 mm, in a top view.

## Revendications

1. Système d'évacuation (20), agencé
- pour le transfert d'un produit à transporter (9) sur une zone de transfert (26a) depuis une section de transport (10a) situé en amont,
- pour transporter au moins par moments le produit à transporter (9) à l'intérieur d'une zone de transport (26f) dans un sens du transport (FR) et en particulier dans un plan de transport (FE), et
- pour l'évacuation sélective du produit à transporter (9) en direction d'une zone d'évacuation (3) disposée latéralement dans le sens du transport (FR),
le système d'évacuation (20) comprend
une pluralité de chariots à bande (21), qui sont disposées circulant le long d'un guidage (23) de telle manière que les chariots à bande (21) se déplacent au moins par moments dans le sens du transport (FR), en particulier dans la zone de transport (26f),
le chariot à bande (21) comprend une bande transporteuse (24),
sachant que la bande transporteuse (24) constitue au moins par moments une surface d'appui (241) pour le produit à transporter (9),
sachant que pour l'évacuation sélective latérale du produit à transporter (9), la bande transporteuse (24) peut être déplacée de façon sélective dans un sens transversal (Q) transversalement au sens du transport (FR), en particulier et en même temps parallèlement à un plan de transport (FE),
sachant que la bande transporteuse (24) est entraînée par une roue d'entraînement (312),
**caractérisé en ce que**
la bande transporteuse (24) est guidée sur le chariot à bande (21) de telle manière que la bande transporteuse (24) est tordue entre la surface d'appui (241) et la roue d'entraînement (312).

2. Système d'évacuation (20) selon la revendication 1,
**caractérisé en ce que**
pendant que le chariot à bande (21) est disposé dans la zone de transport (26f), la roue d'entraînement (312) est logée pouvant tourner autour d'un axe d'entraînement (A312) orienté transversalement au sens du transport (FR).

3. Système d'évacuation (20) selon l'une quelconque des revendications précédentes, **caractérisé en ce que**
pendant que le chariot à bande (21) est disposé dans la zone de transport (26f), un galet de bande (214a) est orienté parallèlement au sens du transport (FR) pour guider un brin supérieur (24o) de la bande transporteuse (24).

4. Système d'évacuation (20) selon l'une quelconque des revendications précédentes, **caractérisé en ce que**
la roue d'entraînement (311) peut être entraînée de façon sélective par un clapet de commande fixe (313).

5. Installation de transport (1), comprenant
une première section de transport (10a),
un système d'évacuation selon l'une quelconque des revendications précédentes, sachant que l'installation de transport (1) est agencée de sorte que
le produit à transporter (9) est mis à disposition depuis la première section de transport (10a) sur le système d'évacuation (20) dans le sens du transport (FR) et dans le plan de transport (FE),
en particulier que le produit à transporter (9) est amené depuis la première section de transport (10a) au système d'évacuation (20) dans le sens du transport (FR) et dans le plan de transport (FE).

6. Installation de transport (1) selon la revendication précédente, comprenant
une deuxième section de transport (20a),
sachant que l'installation de transport (1) est agencée de sorte que
le produit à transporter (9) est mis à disposition depuis le système d'évacuation (20) sur la deuxième section de transport (10b) dans le sens du transport (FR) et dans le plan de transport (FE),
en particulier que le produit à transporter (9) continue d'être transporté depuis la deuxième section de transport (10b) dans le sens du transport (FR) et dans le plan de transport (FE).

7. Utilisation d'un système d'évacuation (20) ou d'une installation de transport (1) selon l'une quelconque des revendications précédentes pour le transfert d'un produit à transporter (9) au point de transfert (26a),
pour le transport au moins par moments du produit à transporter (9) dans le sens du transport (FR),
et
pour l'évacuation sélective du produit à transporter (9) dans la zone d'évacuation (3), qui est disposée, en vue de dessus, latéralement au sens du transport (FR).

8. Utilisation selon la revendication précédente, sachant qu'un produit à transporter (9) le plus petit possible est dimensionné de telle manière qu'il repose dans une zone de transport (26f) toujours sur deux bandes transporteuses (24) de deux chariots à bande (21) voisines.

9. Utilisation selon l'une quelconque des revendications précédentes,
sachant qu'un produit à transporter (9) le plus petit possible est dimensionné de telle manière qu'une longueur latérale (B9) minimale, vue de dessus, est au maximum de 120 mm, en particulier au maximum de 90 mm.
